# EUROPEAN PATENT APPLICATION

(11) **EP 4 105 660 A1**
(43) Date of publication of application: **21.12.2022**
(21) Application number: 21754230.7
(22) Date of filing: 18.01.2021
(51) Int. Cl.: G01N 35/00, G01N 21/27

(54) **AUTOMATIC ANALYSIS DEVICE**

(30) Priority: 14.02.2020 JP 2020023192
(71) Applicant: Hitachi High-Tech Corporation, Minato-ku Tokyo 105-6409 (JP)
(72) Inventor: OOTAKI, Tomotada, Tokyo 105-6409 (JP); TAKAHASHI, Kenichi, Tokyo 105-6409 (JP); IIJIMA, Masahiko, Tokyo 105-6409 (JP)
(74) Representative: MERH-IP Matias Erny Reichl Hoffmann Patentanwälte PartG mbB
(86) International application number: PCT/JP2021/001435
(87) International publication number: WO 2021/161723

(57) **Abstract**

Provided is an automatic analysis device in which a step for checking the progress of deterioration of a reagent can be automated and the expiration date of the reagent can be managed. Properties in absorption spectroscopic analysis pertaining to a standard liquid during implementation of calibration are used to calibrate the automatic analysis device so as to generate a standard curve N times for each lot. A series of action are repeated, with successive results in the implementation of calibration being updated while N is increased by 1 for each instance, until a first lot is completed. The final results are displayed in a dedicated screen image. This makes it possible to preliminarily ascertain the deterioration of the reagent, therefore making it possible to preemptively prevent inferiority in terms of repeatability and linearity, as well as to contribute to freedom from complex operations, reduction of cost, improvement in quality of data, and prevention of medical malpractice caused by a delay in reporting.

## Description

### Technical Field

The present invention relates to an automatic analysis device, and more particularly to a technique for predicting and notifying an expiration date of a clinical extracorporeal diagnostic drug (reagent) to be mounted.

### Background Art

In an automatic analysis device that performs biochemical and immunological component analysis on blood and urine, a clinical extracorporeal diagnostic drug (reagent) dedicated to measurement is installed in the device and used for measurement. The reagent is installed in a dedicated area in a cold storage state or a normal temperature state in the device. Clinical reagents are manufactured and sold by reagent makers, and an expiration date and quality thereof are managed under appropriate management. Deterioration and alteration of the reagent cause data failure, and thus, management after purchase must be strictly performed.

However, the reality is that the management after once the reagent is installed in the device is not clearly performed. Further, since a plug on a reagent upper portion is in a state of being removed during the installation in the device, the reagent is always stored in a state of being in contact with air. Therefore, the actual situation is that, in addition to natural deterioration during use, the reagent is used under conditions where oxidation by air, evaporation or concentration, or alteration of components due to a temperature change is accelerated, and thus, management in expiration date in accordance with performance of the reagent or stability of the components is a problem for maintaining quality. When a deteriorated reagent is used, there is a possibility that inferiority in terms of repeatability and linearity is caused, and the inferiority in terms of repeatability leads to erroneous diagnosis due to inferior test results, and the inferiority in terms of linearity leads to a delay in test reporting due to an increase in retest samples and an increase in work of an operator, so that measurement with a reagent whose performance is guaranteed is an essential matter for cost reduction.

At present, in current status confirmation of the reagent, the operator confirms a degree of increase and decrease in an absorbance value of a standard liquid during calibration implementation, and confirms whether or not the deterioration occurs. When a result is compared with a result during past implementation, the confirmation is performed using a calibration trace function. The calibration trace function is a function that can hold up to 50 times of recording for the same item and is automatically recorded during the calibration implementation. In order to confirm individual reagent performance, a user needs to perform the confirmation operation for each item in a busy time zone before a patient sample test. When it is assumed that a measurement of 40 items is performed, it is necessary to perform check by repeating this operation 40 times, which is a very complicated operation, and thus, efficient execution of such check is a problem.

As related citation lists, there are PTL 1, PTL 2, PTL 3, and the like. PTL 1 discloses that a reagent deterioration degree and an accuracy control result are determined based on a variation pattern of a calibration result, and calibration implementation contents and an interval therebetween are notified. PTL 2 discloses that in a clinical test system, a regression line is obtained based on measurement data of an accuracy control sample, a time at which the measurement data is out of a management range is predicted, and a warning is given to a user. PTL 3 discloses that in an automatic analysis device based on an absorbance, a temporal change parameter for correcting data is stored, and the data is corrected and output according to an elapsed time until the analysis.

### Citation List

### Patent Literature

PTL 1: JP-A-2012-26815
PTL 2: JP-A-2006-17600
PTL 3: JP-A-9-325150

### Summary of Invention

### Technical Problem

As described above, in the measurement using the automatic analysis device, although the check of the reagent performed during the calibration is important, the check is overlooked due to complexity thereof. For this reason, it is occasionally found that a reagent is used for measurement of a patient sample even though the reagent is deteriorated or inferior in quality, and it is determined that retest is necessary due to the inferiority in terms of repeatability and linearity.

An object of the invention is to solve the above-described problem, and to provide an automatic analysis device capable of confirming a state of deterioration of a reagent, and predicting and notifying a use limit date and time.

### Solution to Problem

In order to achieve the above-mentioned object, the invention provides an automatic analysis device configured to perform analysis by causing a sample to react with a reagent, and the automatic analysis device is configured to predict and notify an expiration date of the reagent based on a state of deterioration of the reagent by using a measured absorbance during calibration.

Further, in order to achieve the above-mentioned object, the invention provides the automatic analysis device configured to perform analysis by causing a sample to react with a reagent, the automatic analysis device is configured to execute calibration for generating a standard curve a plurality of times for each lot by using properties in absorption spectroscopic analysis pertaining to a standard liquid, create an approximation line by using at least one of a measurement date and time and measured absorbance data of each of first to (N + 1)th (N = 1, 2, and so on) calibration at a stage where the calibration in any lot is implemented (N + 1) times, and predict and notify a date and time when the measured absorbance data is beyond a predetermined limit absorbance based on the approximation line.

### Advantageous Effects of Invention

According to the invention, by automatically predicting and determining an expiration date of a reagent and reporting the expiration date to an operator, it is possible to use the reagent in a safe state.

### Brief Description of Drawings

[FIG. 1] FIG. 1 is a graph showing a comparison of reaction processes during measurement of the same sample of low concentration (AST).
[FIG. 2] FIG. 2 is a graph showing a comparison of reaction processes during measurement of the same sample of high concentration (AST).
[FIG. 3] FIG. 3 is a graph showing a comparison of reaction processes during measurement of the same sample of low concentration (cholesterol).
[FIG. 4] FIG. 4 is a graph showing a comparison of reaction processes during measurement of the same sample of high concentration (cholesterol).
[FIG. 5] FIG. 5 is a diagram showing an example of a daily change in absorbance during calibration according to a first embodiment.
[FIG. 6] FIG. 6 is a diagram showing an example of a flowchart showing a determination method according to the first embodiment.
[FIG. 7] FIG. 7 is an image configuration diagram during determination according to the first embodiment.
[FIG. 8] FIG. 8 is a diagram showing an example of a reagent expiration date display screen image according to the first embodiment.
[FIG. 9] FIG. 9 is a diagram showing a configuration example of an automatic analysis device according to the first embodiment.

### Description of Embodiments

Hereinafter, an embodiment for carrying out the invention will be sequentially described with reference to the drawings, but prior to this, one configuration example of an automatic analysis device that performs an analysis by causing a sample to which the invention is applied to react with a reagent will be outlined.

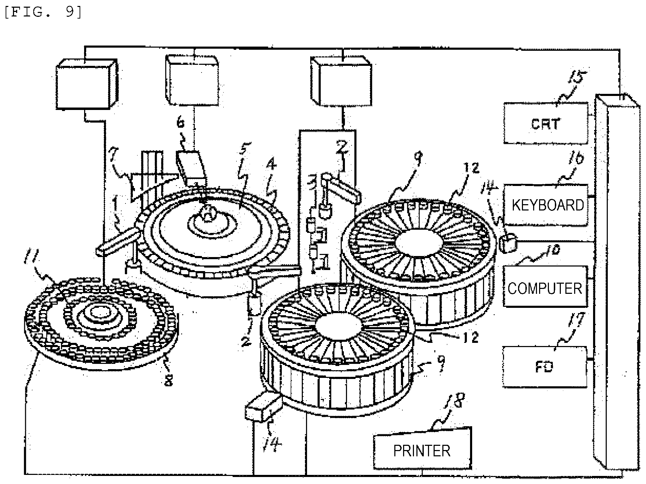

An automatic analysis device shown in FIG. 9 includes a sample dispensing mechanism 1, a reagent dispensing mechanism 2, a sample and reagent stirring mechanism 3, a reaction disk 5 on which a reaction container 4 in which the sample reacts with the reagent is set, a photometer 6 for measuring an absorbance in the reaction container, a reaction container cleaning mechanism 7, a sample disk 8 on which the sample is set, a reagent disk 9 on which the reagent is set, and a computer 10 for controlling the whole device. The sample is placed in a sample cup 11 and set on the sample disk 8. The reagent is placed in a reagent bottle 12 and set on the reagent disk 9.

In such an automatic analysis device, the sample disk 8 rotates and moves, so that a sample container in which the sample to be analyzed is placed is moved to a position of the sample dispensing mechanism 1. After the sample is aspirated, the sample dispensing mechanism 1 discharges a required amount of the sample into the reaction container 4. Thereafter, the reaction disk 8 rotates and stops at a position of the reagent dispensing mechanism 2, and a required amount of the reagent is discharged into the reaction container 4 by the reagent dispensing mechanism 2. Thereafter, the reaction container 4 is moved to a position of the stirring mechanism 3, and stirring is performed. The stirred reaction container 4 passes through a position of the photometer 6, an absorbance is automatically measured, and the absorbance is converted into a concentration by the computer 10. After the analysis ends, the reaction container 4 is cleaned by the reaction container cleaning mechanism 7 and used for a next analysis.

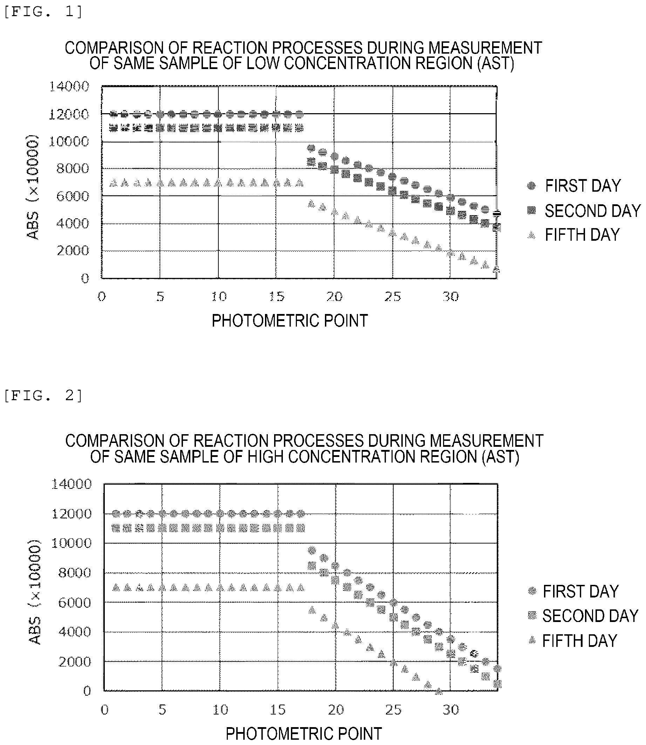

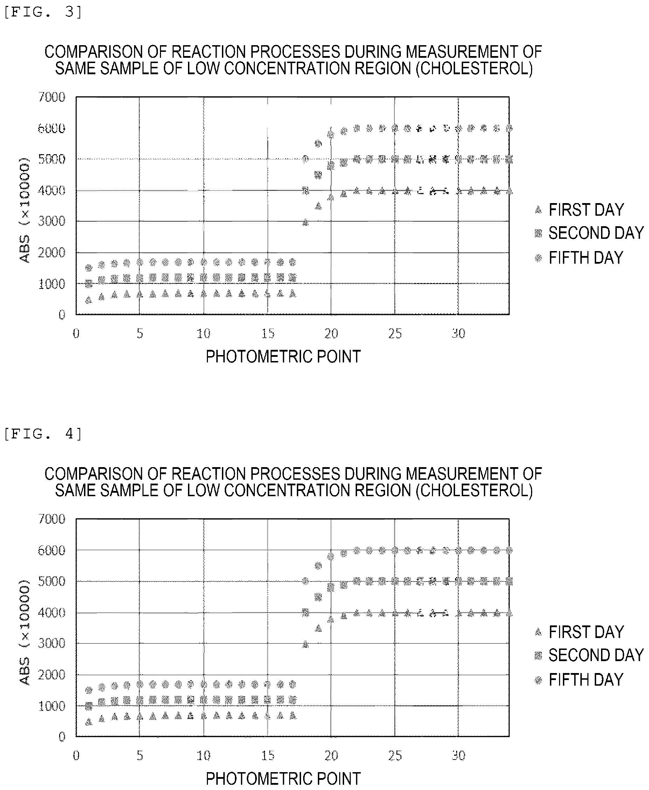

Next, with reference to FIGS. 1 to 4, a specific example of an absorbance change due to progress of deterioration of the reagent used in such an automatic analysis device, that is, a change in absorbance data in an absorption spectroscopic analysis will be described. That is, assuming a case where a new reagent (first day) is used for measurement, a case where the reagent on a third day is used, and a case where the reagent in which deterioration progresses to some extent is used, FIGS. 1 to 4 show diagrams comparing reaction processes during measurement of the same sample. FIGS. 1 and 2 show examples of aspartate aminotransferase (AST), and FIGS. 3 and 4 show examples of cholesterol (CHO).

AST is a representative component in a living body and is an enzyme synthesized in a liver. AST is an item serving as an index of liver disease. The analysis device performs concentration calculation using a rate analysis method. On the other hand, cholesterol (CHO) is a representative of lipid items in the living body. The analysis device performs concentration calculation using an endpoint analysis method. In the reaction processes of the comparison of the reaction processes of low concentration region (AST) of FIG. 1, a horizontal axis represents a photometric point (time) and a vertical axis represents an absorbance value. The same applies to FIGS. 2 to 4.

Three types of plots (first to fifth days) in the figure all show the reaction processes of the same sample. Since AST is the item that employs the rate A analysis method, AST is an item that performs the concentration calculation using an absorbance change rate per unit time. The reaction process is a reaction system in which, after a second reagent is added, NADH, which is a component contained in the reagent, is decomposed into NAD- and H+ by AST in the sample, and thus an NADH reduction reaction is monitored. Since an absolute amount of NADH contained in the reagent decomposes due to deterioration caused by the deterioration of the reagent, a value of an initial absorbance gradually tends to be a low value. As a result, a measurement range of the absorbance is reduced, so that a measurement range is narrowed.

In the comparison of the reaction processes of high concentration region (AST) of FIG. 2, in the reagent on the fifth day after setting, a situation occurs in which the absorbance data becomes 0 or less in the middle of the reaction, and thus a phenomenon occurs in which the sample that can be measured on the first day and the second day cannot be measured. This is because the deterioration of the reagent causes the reagent to become impossible to cope with an absorbance change corresponding to the reaction, and the absorbance change is saturated, so that accurate calculation of the absorbance change rate becomes impossible, and thus the measurement becomes impossible.

In the reaction processes of cholesterol shown in FIGS. 3 and 4, cholesterol is an item that performs the concentration calculation using the endpoint analysis method. This method is an item that performs the concentration calculation using a difference between absorbances before and after the second reagent is added. When the reagent deteriorates or oxidizes, absorbances of a first reagent and the second reagent change due to discoloration of the reagent, decomposition of components, or a pH change, resulting in an abnormal result.

FIG. 3 shows the comparison of the reaction processes of low concentration region (cholesterol), and FIG. 4 shows the comparison of the reaction processes of high concentration region (cholesterol). As the sample contains a greater amount of cholesterol, greater abnormalities are reflected due to an influence of the deterioration. Therefore, on the first day or the second day when the reagent is close to a new product state, both a low value and a high value can be sufficiently measured, but on the fifth day, it is found that the absorbance change is in a region exceeding an allowable limit of the reagent during measurement of a high value sample. In both AST and cholesterol items, if such situations happen, the current automatic analysis device will fall under an Abs or LIMIT alarm, and a retest sample will be flagged.

In such an automatic analysis device, an operator investigates a cause thereof and takes measures in a stage in which a data alarm is flagged. When the deterioration of the reagent is the cause as in the invention, replacement with a new reagent, calibration implementation, and measurement of an accuracy control sample are performed, and after confirming that there is no problem, remeasurement of a patient sample is performed. Therefore, a time of about one hour from initial sample measurement to the re-test is often required. As a result, implement of a complicated backtracking operation on a user side, an influence on disease diagnosis due to a delay in data reporting to a patient, or the like may occur. However, as long as a deterioration state of the reagent can be preliminarily ascertained and the expiration date of the reagent can be clearly determined, such a situation can be prevented.

Therefore, in order to automatically perform a step for checking a progress of the deterioration of the reagent during complicated calibration, which is performed in related art, the automatic analysis device of the invention has a function of performing predictive analysis on the progress of the deterioration of the reagent based on an approximation line or an approximate curve using past and current absorbance values of a calibration result, and notifying an operator of a time limit before which the reagent can be used in a state in which the reagent maintains quality, so that it is possible to save a reagent check time and simplify the reagent check, and it is possible to provide improvement of test quality and reduction of cost.

Further, a degree of the deterioration of the reagent and a degree of the progress are different for each item. Since the reagent is composed of various components and compositions, it is necessary to make a determination in accordance with an actual condition of each item, and thus it is necessary to enable setting of a check method, a check value, and the like on a parameter screen image of each item.

### First Embodiment

The first embodiment is an embodiment of an automatic analysis device configured to predict and notify an expiration date of a reagent based on a deterioration state of the reagent by using a measured absorbance during calibration. That is, the first embodiment is an embodiment of an automatic analysis device having a function of confirming a deterioration state of a reagent based on a calibration result, preliminarily predicting a use limit date and time, and notifying an operator of the prediction result by using a CRT monitor or the like attached to a computer before the retest sample is flagged.

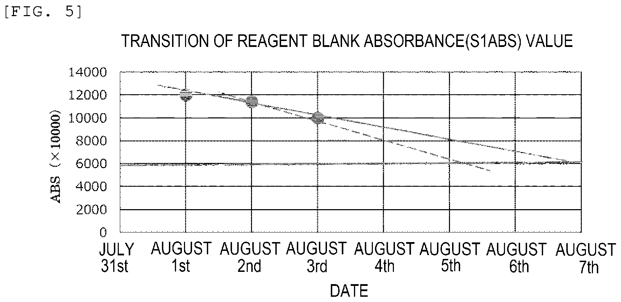

FIG. 5 shows a transition of a reagent blank absorbance (S1ABS) value which is an example of a daily change in absorbance during the calibration, which is a limit absorbance check of the expiration date of the reagent. Although the calibration is performed every day after August 1st, an absorbance of a first standard liquid during the calibration shows a tendency to gradually decrease due to natural deterioration. Therefore, in order to predict a future decrease in absorbance due to the natural deterioration, an approximation line of the absorbance change indicated by a solid line in FIG. 5 is created using absorbance data of a first day (August 1st) and a second day (August 2nd), which are results of latest twice performed calibration. Considering that the calibration may not be performed every day depending on a user, latest two measurement results are used for calculation. A point of intersection of an extension line of the approximation line obtained by the calculation and a preliminarily set limit absorbance line is a usable limit date and time associated with the deterioration of the reagent.

Thus, for example, the approximation line is created using a calibration result, a second calibration result, and respective calibration implementation timings, and a predicted expiration date of the reagent can be automatically determined by using a point corresponding to the point of the intersection of the extension line of the approximation line and the preliminarily set limit absorbance line.

In a result shown in FIG. 5, since it is found that the absorbance exceeds the limit absorbance between August 6th and 7th, information indicating that the reagent can be used until August 6th is displayed on a monitor attached to the device to notify the operator of the information. Further, during measurement on the third day (August 3rd), an approximation line indicated by a dotted line in FIG. 5 is recalculated and created by using two pieces of data of August 2nd and August 3rd, which are two latest results, the future absorbance change is re-predicted (finely adjusted), and information indicating that the reagent can be used until August 5th is overwritten and displayed on a dedicated monitor. The latest two absorbance changes are used for a purpose of accurately ascertaining the absorbance change due to the deterioration of the reagent. The absorbance change during the deterioration of the reagent greatly changes depending on a time after opening and a remaining amount in a bottle. As the remaining amount of the reagent decreases, an amount of air in the bottle increases, which may accelerate the oxidation or the deterioration. As the remaining amount of the reagent becomes less, the progress of the deterioration tends to be faster, but by carrying out this method, it is possible to more correctly reflect an absorbance change close to a current state.

Further, every time the calibration is performed on the fourth day, the fifth day for the reagent bottle, the recalculation is performed by sequentially repeating the above processes, and a result thereof is displayed on the dedicated monitor. Since a dedicated barcode or RFID tag is attached to the reagent bottle, the device can manage a use limit of each reagent bottle by reading information thereof. In addition, since the dedicated barcode or the RFID tag includes information on a lot number and a sequence number of the reagent, the calibration result can be continuously recorded for each bottle, and past acquired data can be traced. Therefore, even when the bottle is a new reagent bottle and is a reagent bottle on which the calibration is not performed, if there is a use experience in the same lot in the past, a record at that time can be fed back, and latest information can be used even if the reagent is not used, so that a predicted limit value can be displayed even in a state where the calibration is not performed. In other words, a measured absorbance during the calibration is recorded for each reagent bottle, and when there is a calibration result of the reagent in the same lot, it is possible to provide expiration date information of a reagent bottle on which the calibration is not performed based on the expiration date determined based on the calibration result.

According to this function, a state of deterioration of a reagent can be preliminarily ascertained at a stage before measurement of a patient sample is performed, so that it is possible to preemptively prevent inferiority in terms of repeatablility and linearity which are found after the test is started, and it is possible to contribute to improvement in quality of data and prevention of a delay in reporting. Note that the number of adopted calibration results is not limited to two, and accuracy of a determined expiration date and time can be improved by increasing the number of adopted calibration results in accordance with the number of calibration implementations.

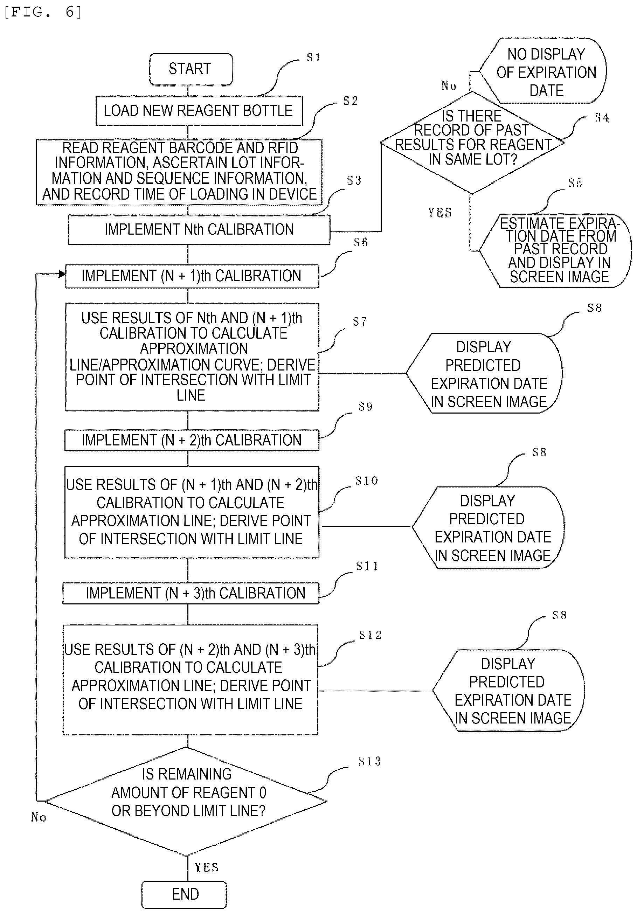

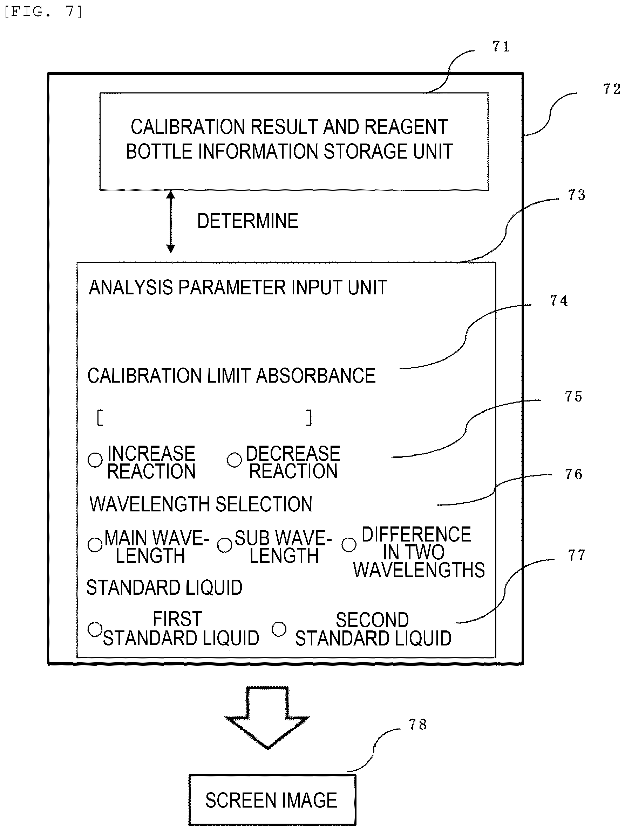

Operations of the automatic analysis device according to the present embodiment will be described with reference to a flowchart related to a determination method shown in FIG. 6 and an image configuration diagram during determination by program processing of a computer shown in FIG. 7. After a start of the flowchart of FIG. 6, a new reagent bottle is loaded into the device by a user (S1), and then lot information and sequence information are read from the barcode information and the RFID attached to the reagent by using a reader incorporated in the reagent disk. Further, a time at which the new reagent bottle is loaded into the device is recorded (S2). A result is stored in a calibration result and bottle information storage unit 71 existing in a reagent expiration date determination unit 72 implemented by the computer 10 shown in FIG. 7.

Then, Nth (N = 1, 2, 3, and so on) calibration is implemented (S3). With respect to the initial read information, use experience of reagents in the same lot and presence or absence of any result are confirmed (S4). If there is a past record (Yes), an expiration date from a current device loading time is calculated using the record, and the calculated expiration date is displayed on a dedicated CRT screen image 78 (S5).

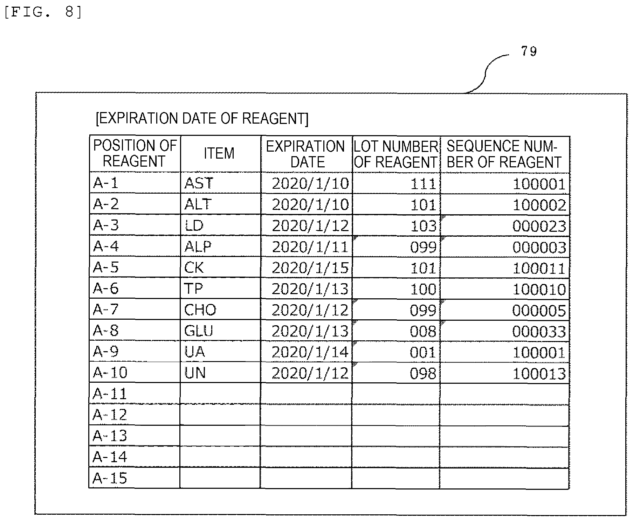

FIG. 8 shows an example of a screen image 79 on which an expiration date of a reagent is displayed. On the screen image 79, an installation position of the reagent, an item, the expiration date of the reagent, a lot number of the reagent, and a sequence number are shown. On the other hand, when there is no past record (No), the expiration date as shown on the screen image 79 is not displayed.

Subsequently, after the reagent is loaded, (N + 1)th calibration is implemented (S6). As shown in FIG. 5, using the Nth and (N + 1)th calibration results, an approximation line related to the calibration implementation timing and the absorbance change is calculated, and a point of intersection with a limit line is derived (S7). Determination is performed based on a limit absorbance value 74 set in an analysis parameter input unit 73 of the reagent expiration date determination unit 72 shown in FIG. 7. The analysis parameter input unit 73 has the calibration limit absorbance 74 and a selection field 75 for selecting whether an absorbance reaction is an increase reaction or a decrease reaction, and a wavelength selection field during the calculation includes setting of a wavelength selection 76 used for calculation during the calibration and a selection field 77 of a first standard liquid/a second standard liquid during the calibration. An approximation line is calculated based on a condition set in the analysis parameter input unit 73, a date and time corresponding to a point of intersection with the calibration limit absorbance 74 is calculated, and an expiration date and time before which the reagent can be used is predicted. A determination result is displayed on the dedicated CRT screen image 78 and information is provided to the operator (S8).

Since an absorbance limit value has both an increase and a decrease in absorbance during the deterioration of the reagent based on characteristics of the reaction, a check parameter input field has a set value of the limit absorbance and options of the increase reaction or the decrease reaction. Further, by providing a selection field for the first standard liquid and an S2 standard liquid for the check, it is possible to perform determination corresponding to various items. That is, condition setting of the determination of the expiration date of the reagent can be flexible setting, and in the condition setting of the determination, setting of the limit absorbance, selection of a calibrator to be used, selection of a main wavelength which is a measurement wavelength/a sub wavelength/a difference in two wavelengths, and the like can be performed in addition to the selection of the standard liquid.

Returning to FIG. 6, the calibration is implemented at a timing corresponding to an (N + 2)th time at a timing of a next day (or a next time) (S9). The approximation line is recalculated using the latest implemented two (N + 1)th and (N + 2)th calibration results, the same determination as S7 is performed (S10), and the display on the dedicated CRT screen image 78 is performed. The result is updated each time, and a latest result is displayed and updated on the screen image. The calibration is implemented at a timing corresponding to an (N + 3)th time at a timing of a next time (S11). The approximation line is calculated using the two (N + 2)th and (N + 3) th calibration results, the same determination as S7 and S10 is performed (S12), and the display on the dedicated CRT screen image 78 is performed.

This operation is repeatedly implemented until a remaining amount of the reagent is 0 or the determination result is beyond the limit value (S13). When the remaining amount of the reagent is 0 or the determination result is beyond the calibration limit absorbance value, the determination in the reagent bottle is ended, but when the remaining amount of the reagent is not 0 or the determination result is not beyond the calibration limit absorbance value, a recalculation operation of a predicted date and time beyond the limit absorbance value is performed, and the result is displayed on the dedicated CRT screen image 78.

According to the automatic analysis device according to the first embodiment described above, that is, an automatic analysis device configured to execute calibration for generating a standard curve a plurality of times for each lot by using properties in absorption spectroscopic analysis pertaining to a standard liquid, create an approximation line by using at least one of measurement date and time and measured absorbance data of each of first to (N + 1)th (N = 1, 2, and so on) times of calibration at a stage where the calibration in any lot is implemented (N + 1) times, and predict and notify a date and time when the absorbance data measured by the calibration is beyond a predetermined limit absorbance based on the approximation line, since a state of deterioration of a reagent can be accurately and preliminarily ascertained, it is possible to preemptively prevent inferiority in terms of repeatability and linearity, as well as to contribute to freedom from complex operations, reduction of cost, improvement in quality of data, and prevention of medical malpractice caused by a delay in reporting.

That is, a function of automatically predicting and determining an expiration date of a reagent and reporting the expiration date to an operator of the automatic analysis device of the present embodiment leads to freedom from complex operations such as performance confirmation of the reagent for each item, which is performed in related art, improvement in data failure due to the inferiority in terms of repeatability and linearity, reduction of backtracking operations such as a retest operation, and prevention of medical malpractice caused by a delay in reporting of test data, and the reagent can be always used in a safe state. In addition, using the calibration data, which is always performed as a routine work to automatically determine the expiration date of the reagent, does not involve preparation of a new sample, and thus it is possible to safely use the reagent without anxiety about an erroneous operation.

The invention is not limited to the embodiment described above and includes various modifications. For example, the above-mentioned embodiment has been described in detail for better understanding of the invention, and the invention is not necessarily limited to those including all configurations described above.

Further, although an example of creating a program that implements a part or all of the configurations, functions, and computers described above is mainly described, it is needless to say that a part or all of them may be implemented by hardware, for example, by designing an integrated circuit. That is, all or a part of the functions of the processing units may be implemented by an integrated circuit such as an application specific integrated circuit (ASIC) or a field programmable gate array (FPGA) instead of the program.

### Reference Signs List

1 sample dispensing mechanism
2 reagent dispensing mechanism
3 stirring mechanism
4 reaction container
5 reaction disk
6 photometer
7 reaction container cleaning mechanism
8 sample disk
9 reagent disk
10 computer
15 CRT
71 calibration result and reagent bottle information storage unit
72 reagent expiration date determination unit
73 analysis parameter input unit
74 calibration limit absorbance input field
75 increase reaction/decrease reaction selection field
76 wavelength selection field
77 standard liquid selection field
78 dedicated CRT screen image
79 screen image

## Claims

1. An automatic analysis device configured to perform analysis by causing a sample to react with a reagent, and to predict and notify an expiration date of the reagent based on a state of deterioration of the reagent by using a measured absorbance during calibration.

2. The automatic analysis device according to claim 1, wherein
the measured absorbance during the calibration is recorded for each reagent bottle, and when there is a calibration result of the reagent in a same lot, expiration date information of a reagent bottle on which the calibration is not performed is provided based on the expiration date determined based on the calibration result.

3. The automatic analysis device according to claim 1, wherein
calibration that generates a standard curve a plurality of times for each lot is executed by using a property in absorption spectroscopic analysis pertaining to a standard liquid, an approximation line is created by using at least one of measurement date and time and measured absorbance data of each of first to (N + 1)th (N = 1, 2, and so on) calibration at a stage where the calibration in any lot is implemented (N + 1) times, and a date and time when the measured absorbance data is beyond a predetermined limit absorbance is predicted and notified based on the approximation line.

4. The automatic analysis device according to claim 3, wherein
the approximation line is created by using an initial calibration result, a second calibration result, and respective calibration implementation timings, and a predicted expiration date of the reagent is automatically determined by using a point corresponding to a point of intersection of an extension line of the approximation line and a preliminarily set limit absorbance line.

5. The automatic analysis device according to claim 3, wherein
accuracy of a determined expiration date and time is improved by increasing the number of adopted calibration results in accordance with the number of calibration implementations.

6. The automatic analysis device according to claim 1, wherein
condition setting of determination of the expiration date of the reagent is flexible setting.

7. The automatic analysis device according to claim 6, wherein
in the condition setting of the determination, setting of a limit absorbance, selection of a calibrator to be used, and selection of a main wavelength which is a measurement wavelength/a sub wavelength/a difference in two wavelengths are performed.
